# FASCICULE DE BREVET EUROPEEN

(11) **EP 1 254 329 B1**
(45) Date de publication et mention de la délivrance du brevet: **15.10.2003**
(21) Numéro de dépôt: 01903865.2
(22) Date de dépôt: 03.01.2001
(51) Int. Cl.: F16H 63/30

(54) **EMBRAYAGE HYDRAULIQUE ET TRAIN PLANETAIRE, EN PARTICULIER POUR TRANSMISSION AUTOMATIQUE**
HYDRAULISCHE KUPPLUNG UND UMLAUFGETRIEBE, INSBESONDERE FÜR AUTOMATGETRIEBE
INTEGRATED ASSEMBLY COMPRISING A HYDRAULIC CLUTCH AND A PLANETARY GEAR TRAIN, IN PARTICULAR FOR AUTOMATIC TRANSMISSION PARTICULARLY OF VEHICLES, AND AUTOMATIC TRANSMISSION COMPRISING SAME

(30) Priorité: 12.01.2000 FR 0000327
(43) Date de publication de la demande: 06.11.2002
(73) Titulaire: SC Brevets Lepelletier, 78400 Chatou (FR)
(72) Inventeur: LEPELLETIER, Pierre, F-78400 Chatou (FR)
(74) Mandataire: Santarelli
(86) Numéro de dépôt international: FR0100020
(87) Numéro de publication internationale: WO01051831

(56) Documents cités:
- DE-A- 19 631 548
- US-A- 2 399 097
- US-A- 2 795 972
- PATENT ABSTRACTS OF JAPAN vol. 1997, no. 05, 30 mai 1997 (1997-05-30) & JP 09 004655 A (JATCO CORP), 7 janvier 1997 (1997-01-07)

## Description

La présente invention se situe dans le domaine des composants pour transmissions automatiques du type à planétaires, notamment pour véhicules automobiles, constituées de trains planétaires contrôlés par des éléments de friction tels que des freins et des embrayages hydrauliques.

Longtemps les transmissions automatiques de véhicules automobiles sont restées limitées à trois vitesses, puis sont passées à quatre, et on observe depuis quelques années une tendance à passer à cinq pour répondre à une certaine demande du marché, apparue d'abord dans le haut de gamme et tendant aujourd'hui à s'étendre vers les gammes moyennes. Certains constructeurs envisagent même d'aller jusqu'à six vitesses.

Pour suivre cette évolution, les constructeurs ont été amenés très généralement à concevoir des transmissions utilisant plusieurs embrayages montés directement sur l'arbre d'entrée de la transmission, ou agencés de manière à entraîner plusieurs éléments de la transmission à la vitesse d'entrée.

Pour optimiser ces transmissions, on a déjà proposé, par exemple dans le document générique EP-A-0 434 525, d'entraîner deux éléments de la transmission non plus à la vitesse d'entrée mais à une vitesse réduite.

L'invention se propose de réduire l'encombrement, notamment axial, de telles transmissions.

L'invention a pour objet un ensemble intégré comprenant un embrayage hydraulique et un train planétaire réducteur de vitesse, ledit ensemble comportant, d'une part, un palier d'alimentation fixe, un carter tournant solidaire d' un manchon d'alimentation recevant au moins un piston, une paroi dite de fermeture et au moins un jeu de disques de friction destinés à entraîner au moins un moyeu de sortie, et, d'autre part, un train planétaire réducteur de vitesse comportant une couronne destinée à être entraînée par un arbre d'entrée, un planétaire fixe, et un porte-satellites, caractérisé par le fait que la paroi de fermeture est rendue solidaire en rotation du manchon d'alimentation et du carter et entraînée directement par le porte-satellites.

De préférence, le porte-satellites est assemblé directement sur la paroi de fermeture et le planétaire est maintenu fixe en rotation directement par le palier d'alimentation fixe.

Avantageusement, les satellites sont montés tournant autour d'axes qui présentent des extensions engagées dans des perçages prévus dans la paroi de fermeture et participant à la transmission du couple entre le porte-satellites, la paroi de fermeture, le manchon d'alimentation et le carter tournant.

De préférence, la paroi de fermeture et le piston définissent entre eux une chambre de compensation centrifuge.

Avantageusement, les axes des satellites sont traversés par des canaux de lubrification du train planétaire s'étendant parallèlement à l'axe et débouchant dans la chambre de compensation centrifuge.

De préférence, les canaux de lubrification ménagés dans les axes des satellites assurent tant la lubrification du train planétaire que l'alimentation de la chambre de compensation centrifuge.

Avantageusement, la chambre de compensation centrifuge est alimentée à partir de canaux ménagés dans le palier d'alimentation fixe et dans le manchon d'alimentation.

Avantageusement, les canaux d'alimentation pratiqués dans le palier d'alimentation fixe et dans le manchon d'alimentation assurent tant l'alimentation de la chambre de compensation centrifuge que la lubrification du train planétaire.

De préférence, la paroi de fermeture est rendue également solidaire en translation du carter tournant ; la paroi de fermeture est en trois parties, à savoir une première partie en forme de moyeu comportant des cannelures engagées dans des cannelures correspondantes du manchon d'alimentation, une deuxième partie en forme d'écrou comportant un filetage engagé dans un filetage correspondant du manchon d'alimentation, et une troisième partie en forme de piston munie d'un joint d'étanchéité et engagée dans le piston ; les première et deuxième parties de la paroi de fermeture sont assemblées par des vis.

Avantageusement, deux butées axiales sont interposées l'une entre le planétaire et le porte-satellites et l'autre entre le porte-satellites et la couronne, et assurent, simultanément, l'écartement entre le planétaire, le porte-satellites et la couronne, et la position axiale de l'ensemble ; une rondelle intermédiaire est interposée entre le palier d'alimentation fixe et le planétaire et permet de régler la position axiale de l'ensemble.

La présente invention a également pour objet une transmission automatique, notamment de véhicules, comportant un ensemble intégré tel que l'ensemble ci-dessus.

Les caractéristiques et avantages de l'invention ressortiront d'ailleurs de la description qui va suivre à titre d'exemple en référence aux dessins annexés dans lesquels :
- la figure 1 représente une première forme de réalisation de l'invention, avec un embrayage double formé de deux embrayages simples imbriqués fonctionnant en série,
- les figures 2 et 3 apportent un certain nombre de détails complétant la figure 1,
- la figure 4 montre les variations importantes possibles sur le train planétaire sans modification notable de la construction,
- la figure 5 représente une deuxième forme de réalisation de l'invention, avec un embrayage double formé de deux embrayages simples imbriqués fonctionnant en parallèle,
- la figure 6 représente une troisième forme de réalisation de l'invention, avec un embrayage simple,
- la figure 7 représente schématiquement une application de l'invention à une transmission automatique de véhicule à 5 ou 6 vitesses avant - 1 vitesse arrière.

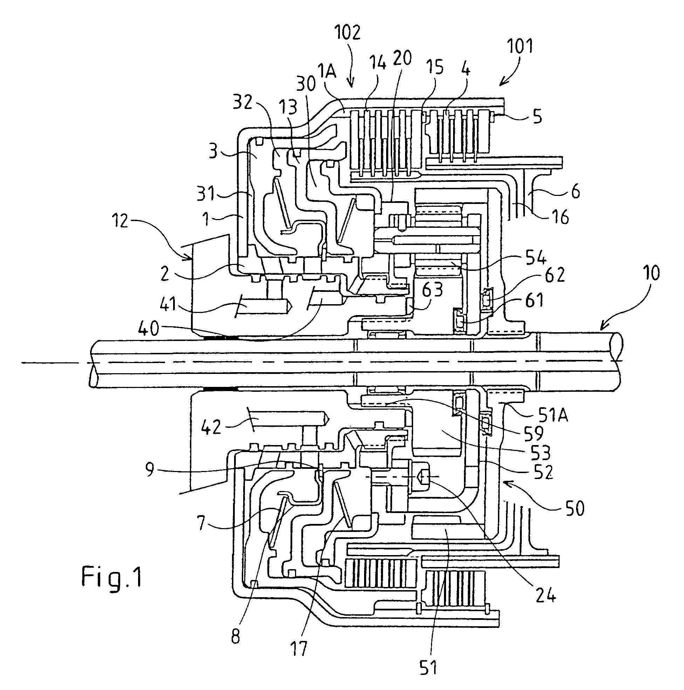

En se reportant aux figures 1 à 3, on voit un embrayage double associé à un arbre d'entrée 10, un palier d'alimentation fixe 12, un premier 101 et un deuxième 102 embrayages imbriqués et un train planétaire réducteur de vitesse 50.

Selon une première caractéristique de l'invention, le premier embrayage 101 comprend un carter tournant 1 muni de cannelures 1A solidaire d'un manchon d'alimentation tournant 2 et un premier piston 3 engagé dans le carter 1, dans le manchon 2 et dans les cannelures 1A, coopérant avec un premier jeu de disques de friction 4 engagé dans les cannelures 1A et arrêté par un circlips 5, en vue d'entraîner un premier moyeu de friction 6. Une rondelle élastique 7 prenant appui sur une cage 8 arrêtée par un circlips 9 assure le retour en arrière du piston 3 en butée sur le carter 1.

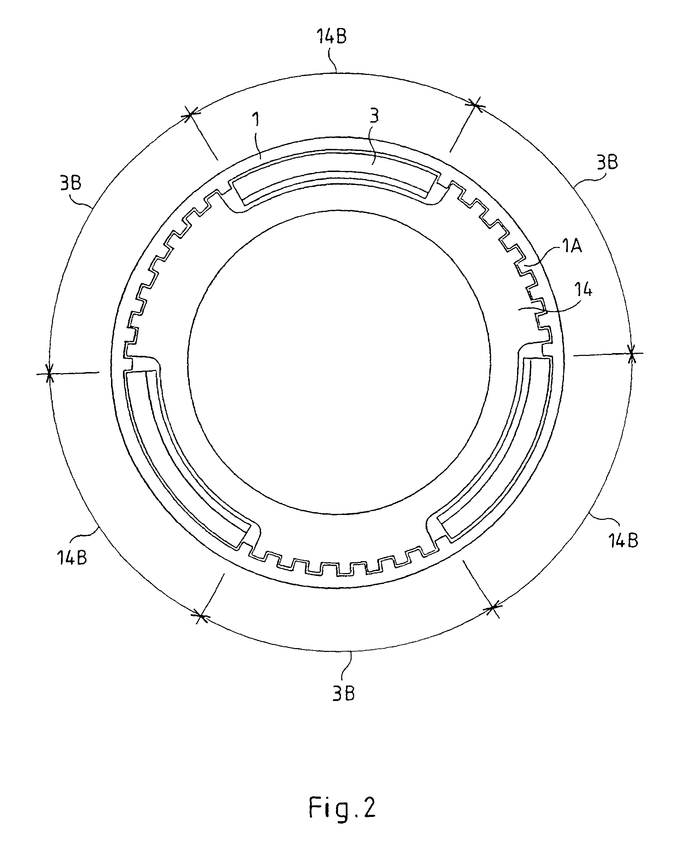

Le deuxième embrayage 102 comprend un deuxième piston 13 engagé dans le premier piston 3 et dans le manchon 2, coopérant avec un deuxième jeu de disques de friction 14 engagé dans les cannelures 1A et arrêté par un circlips 15, en vue d'entraîner un deuxième moyeu de friction 16. Une rondelle élastique 17 prenant appui sur une butée 20 en forme de paroi, dite de fermeture, assure le retour en arrière du piston 13 en butée sur le circlips 9 ; cette paroi 20 est ici engagée dans le piston 13, munie d'un joint d'étanchéité, convenablement disposé, pour former un bouclier centrifuge, et arrêtée axialement dans le manchon 2. Suivant le détail de la figure 2, le piston 3 et le jeu de disques 14 présentent des embrèvements alternés 3B et 14B répartis le long de leur circonférence pour permettre au piston 3 de coopérer librement avec le jeu de disques 4, et au jeu de disques 14 avec le moyeu 16.

Le carter 1 et le piston 3 délimitent une première chambre de travail 31, le piston 3 et le piston 13 délimitent une deuxième chambre de travail 32 et le piston 13 et la paroi 20 délimitent une cavité de compensation centrifuge 30. Des canaux d'alimentation 41, 42, 40, 40A pratiqués dans le palier fixe 12 et dans le manchon tournant 2 permettent d'alimenter indépendamment la chambre de travail 31 sous une pression P1, la chambre de travail 32 sous une pression P2 inférieure à P1, et la cavité de compensation 30 sous une pression P0, cette dernière généralement basse, comme par exemple une pression de lubrification, et inférieure à P1 et P2. Des joints convenablement disposés assurent l'étanchéité de l'ensemble.

Le piston 3 de l'embrayage 101 réagit à la pression P1-P2 et le piston 13 de l'embrayage 102 à la pression P2-P0, correspondant à une commande en série des deux embrayages. En rotation, les forces centrifuges s'équilibrent de part et d'autre du piston 3 et du piston 13, éliminant toute influence parasite de la vitesse.

Le train planétaire réducteur de vitesse 50 comprend une couronne 51 portée par un moyeu cannelé 51A entraîné par l'arbre d'entrée 10, un planétaire 53 maintenu fixe, et un porte-satellites 52 entraîné à la vitesse réduite requise pour les embrayages 101, 102. Le porte-satellites 52 est constitué d'une cage 52A s'étendant jusqu'au voisinage du centre et d'une joue de fermeture 52B portant ensemble des satellites 54 montés sur des axes 55 engagés dans des perçages correspondants. Les axes 55 sont munis de canaux de lubrification 56 reliés à un circuit de lubrification propre du train planétaire non représenté, et arrêtés par tout moyen approprié et par exemple par des goupilles fendues 57 engagées dans la joue 52B. Une première butée axiale 61 maintient l'écartement entre le planétaire 53 et la cage 52A du porte-satellites, et une deuxième butée axiale 62 maintient l'écartement entre la cage 52A du porte-satellites et le moyeu 51A portant la couronne 51.

La paroi de fermeture 20 est en trois parties : une première partie 21 en forme de moyeu comportant des cannelures 21A engagées dans des cannelures correspondantes du manchon tournant 2, une deuxième partie 22 en forme d'écrou comportant un filetage 22A engagé de même dans un filetage correspondant du manchon 2, et une troisième partie 23 en forme de piston recevant le joint d'étanchéité et engagée dans le piston 13. Les deux parties 21 et 22 sont assemblées l'une sur l'autre par tout moyen approprié et par exemple par des vis 24, et de manière à maintenir le passage entre la partie 21 et le manchon 2 en prolongement des canaux d'alimentation 40, 40A. La paroi de fermeture 20 est ainsi rendue entièrement solidaire en rotation et en translation du carter tournant 1 et l'alimentation de la cavité 30 est assurée.

Le porte-satellites 52 du train planétaire 50 est fixé directement sur la paroi de fermeture 20 par tout moyen approprié et par exemple par les vis 24, et le planétaire 53 est engagé dans le palier d'alimentation fixe 12 dans des cannelures 59 l'immobilisant en rotation, et en appui sur une rondelle intermédiaire 63 d'épaisseur appropriée.

On obtient ainsi un ensemble intégré embrayage double/train planétaire réducteur de vitesse compensé à la force centrifuge particulièrement compact, dans lequel les butées axiales 61 et 62, non seulement maintiennent l'écartement entre le planétaire 53, le porte-satellites 52 et la couronne 51 du train planétaire, mais de plus maintiennent axialement le manchon d'alimentation tournant 2 et tout l'embrayage, tandis que la rondelle intermédiaire 63 permet de régler la position axiale de l'ensemble.

Selon une deuxième caractéristique de l'invention, les axes de satellites 55 sont prolongés par des extensions 55A s'engageant dans des perçages correspondants de la paroi de fermeture 20. On réalise ainsi la transmission du couple du porte-satellites 52 au carter tournant 1 et réciproquement via la paroi 20 et le manchon tournant 2 directement par les axes de satellites 55 et non plus seulement par les vis de fixation 24.

Selon une troisième caractéristique de l'invention, les canaux de lubrification 56 des axes de satellites 55 sont mis en communication avec la cavité de compensation centrifuge 30 par des passages 58, permettant d'assurer le remplissage de la cavité 30 et la lubrification du train planétaire 50 à partir d'une même alimentation commune. Cette alimentation commune peut être soit celle de la cavité 30 par les canaux d'alimentation 40, 40A et leur prolongement entre le manchon 2 et la partie 21 de la paroi de fermeture 20, et dans ce cas le circuit de lubrification propre du train planétaire 50 peut être supprimé, soit le circuit de lubrification propre du train planétaire 50, et dans ce cas les canaux d'alimentation 40, 40A et leur prolongement jusqu'à la cavité 30 peuvent être supprimés.

Par rapport à l'arbre d'entrée 10, on notera que l'ensemble 101, 102 selon l'invention présente une inertie considérablement réduite, en proportion du carré du rapport de réduction de la vitesse, ce qui de toutes façons et en particulier dans une transmission automatique automobile est un avantage très important.

De même, on notera que les forces centrifuges subies séparément par chacun des deux embrayages 101, 102 sont réduites dans la même proportion, ce qui, joint à la compensation à la force centrifuge déjà réalisée, élimine plus complètement encore toute possibilité d'effet parasite de la vitesse et est un autre avantage très important.

Enfin, on notera que la construction selon l'invention permet de bénéficier de ces avantages très importants dans une très grande plage d'utilisation.

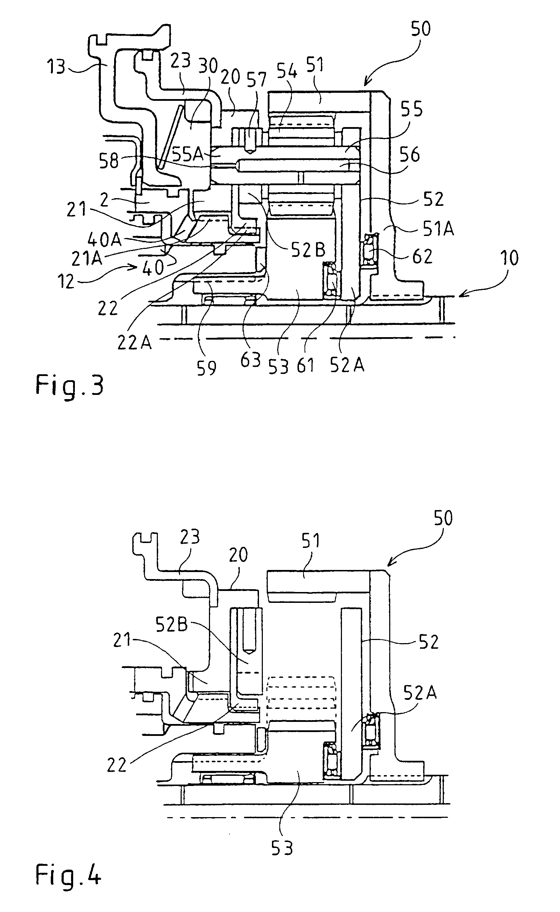

On se reportera pour cela à la figure 4 où on reconnaît le train planétaire 50, la couronne 51, la cage 52A et la joue 52B du porte-satellites 52, le planétaire 53, et les trois parties 21, 22, 23 de la paroi de fermeture 20. A titre d'exemple, et pour une dimension donnée de la couronne 51, on a ajouté en pointillé plusieurs dimensions possibles du planétaire 53, s'accompagnant bien entendu de variations moitié moindres de la position des axes de satellites 55. Seules sont rendues nécessaires des modifications correspondantes des perçages de la paroi de fermeture 20 recevant les extensions 55A des axes 55, et éventuellement l'emplacement des vis 24.

Le tableau 1 ci-après, dans lequel le rapport de dimension planétaire 53/couronne 51 est pris pour paramètre et la vitesse de l'arbre d'entrée 10 prise pour unité, précise l'ordre de grandeur tout à fait spectaculaire des gains ainsi réalisés :

**Tableau 1 :**

| | | | | | |
|---|---|---|---|---|---|
| Rapport Planétaire 53/ Couronne 51 | 0,42 | 0,47 | 0,52 | 0,57 | 0,62 |
| Vitesse d'entrée prise pour unité | 1 | 1 | 1 | 1 | 1 |
| Vitesse réduite | 0,71 | 0,68 | 0,66 | 0,64 | 0,62 |
| Gain sur les forces centrifuges et sur l'inertie | 50 % | 54 % | 57 % | 59 % | 62 % |

Pour une couronne 51 de 79 dents, par exemple, les rapports de dimension ci-dessus correspondent sensiblement à des planétaires 53 de 33 dents, 37 dents, 41 dents, 45 dents et 49 dents respectivement.

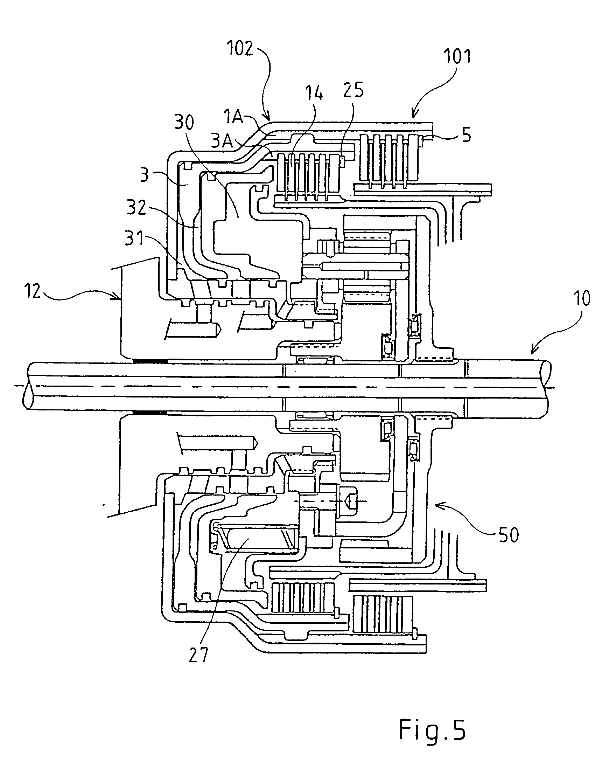

On se reportera maintenant à la figure 5, qui représente une deuxième forme de réalisation de l'invention dans laquelle l'embrayage est double et comporte deux embrayages imbriqués 101, 102 comme à la figure 1, mais fonctionnant non plus en série mais en parallèle. Seules sont portées à la figure 5 les références nouvelles ou présentant des modifications par rapport à la figure 1.

A la différence de la figure 1, le piston 3 et le jeu de disques 14 ne présentent plus d'embrèvements alternés 3B et 14B répartis le long de leur circonférence, mais le piston 3 est muni de cannelures 3A, et le jeu de disques 14 est engagé dans les cannelures 3A et arrêté par un circlips 25 et non plus dans les cannelures 1A du carter 1 et arrêté par le circlips 15. Les deux rondelles élastiques 7 et 17, la cage 8 et le circlips 9 sont supprimés et remplacés par un unique jeu de ressorts hélicoïdaux 27 ramenant le piston 13 en butée sur le piston 3 et le piston 3 en butée sur le carter 1.

L'embrayage 101 réagit à la pression P1-P0 et l'embrayage 102 à la pression P2-P0, correspondant à une commande en parallèle des deux embrayages, sans autre modification. L'équilibrage à la force centrifuge est le même et les gains spectaculaires sur l'inertie rapportée à l'arbre d'entrée et les forces centrifuges effectivement subies sont les mêmes.

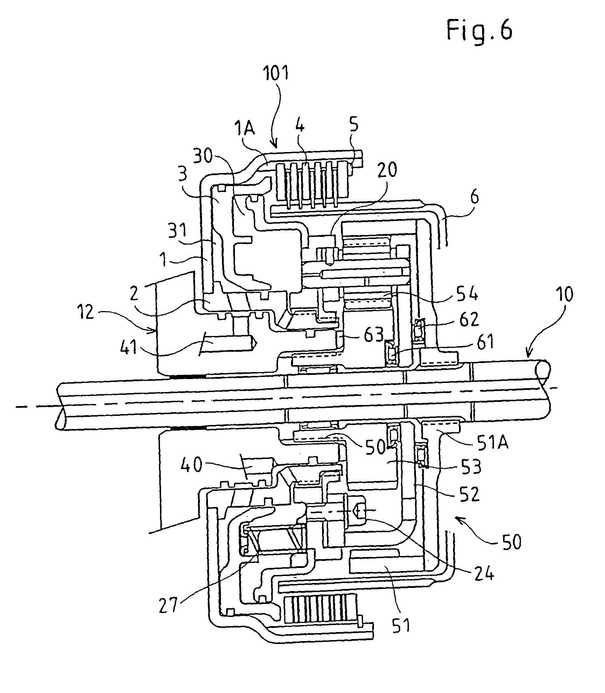

On se reportera maintenant à la figure 6, qui représente une troisième forme de réalisation de l'invention, dérivée des figures 1 et 5, ne comportant qu'un seul embrayage, soit 101. Tous les éléments communs aux figures 1, 5 et 6 ou remplissant les mêmes fonctions portent les mêmes références.

A la différence des figures 1 et 5, la paroi de fermeture 20 est engagée directement dans le piston 3, et les ressorts hélicoïdaux 27 ramènent directement le piston 3 en butée sur le carter 1, sans autre modification. Tous les détails portés aux figures 3 et 4 et relatifs aux figures 1 et 5 sont les mêmes, l'équilibrage centrifuge est le même, et toutes les propriétés relatives à l'inertie rapportée à l'arbre d'entrée et aux forces centrifuges effectivement subies sont les mêmes.

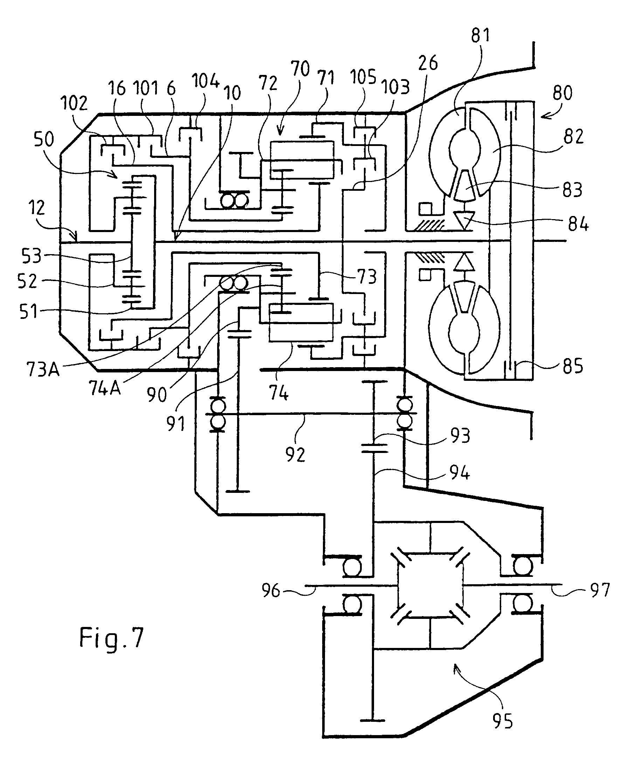

On se reportera maintenant à la figure 7, qui représente schématiquement une application de l'invention à une transmission automatique de véhicule à 5 ou 6 vitesses avant - 1 vitesse arrière utilisant un embrayage double selon les figures 1 ou 5, plus particulièrement pour des véhicules à traction avant et moteur en travers.

Une telle transmission comprend essentiellement :
- un train planétaire 70 à quatre éléments du type Ravigneaux comprenant une couronne 71, un porte-satellites 72 entraînant une roue de sortie 90, deux planétaires 73 et 73A, et deux jeux de satellites : un jeu de satellites 74 engrenant avec la couronne 71 et avec le planétaire 73, et un jeu de satellites 74A engrenant avec les satellites 74 et avec le planétaire 73A ;
- un embrayage double réducteur de vitesse selon les figures 1 ou 5, et par exemple selon la figure 1, où on reconnaît le train planétaire 50, la couronne 51 entraînée par l'arbre d'entrée 10, le planétaire 53 maintenu fixe en rotation par le palier d'alimentation fixe 12 solidaire du carter de la transmission, le porte-satellites 52 entraînant à vitesse réduite les deux embrayages 101, 102, et les deux moyeux de friction 6 et 16 entraînant les planétaires 73A et 73 ;
- un embrayage simple 103 solidaire de la couronne 71 destinée à être entraînée directement à la vitesse d'entrée par un moyeu de friction 26 entraîné par l'arbre 10 ;
- un frein 104 destiné à immobiliser le moyeu de friction 6 et le planétaire 73A ;
- un frein 105 destiné à immobiliser la couronne 71 et l'embrayage 103.

De manière classique, la transmission est de plus, d'une part, précédée d'un convertisseur hydraulique de couple 80, comprenant un impulseur 81 lié au moteur, une turbine 82 entraînant l'arbre d'entrée 10, un réacteur 83, une roue libre 84, un embrayage de pontage 85, et, d'autre part, suivie de deux renvois à arbres parallèles comprenant la roue de sortie 90 engrenant avec une roue 91 solidaire d'un arbre intermédiaire 92, et un pignon 93 solidaire de l'arbre intermédiaire 92 engrenant avec une roue 94 solidaire d'un différentiel 95 entraînant les sorties 96 et 97 vers les roues motrices.

Les six vitesses avant et la marche arrière sont obtenues, la première en serrant l'embrayage 102 et le frein 105, la deuxième en serrant l'embrayage 102 et le frein 104, la troisième en serrant les embrayages 101 et 102, la quatrième en serrant les embrayages 102 et 103, la cinquième en serrant les embrayages 103 et 101, la sixième en serrant l'embrayage 103 et le frein 104, et la marche arrière en serrant l'embrayage 101 et le frein 105. Les raisons de chaque vitesse à la suivante et jusqu'à la troisième, soit première-deuxième, deuxième-troisième et première-marche arrière, sont données par le train Ravigneaux 70 seul, et à partir de la troisième soit troisième-quatrième, quatrième-cinquième et cinquième-sixième, par combinaison du train Ravigneaux 70 et du train réducteur 50.

En vue de l'utilisation en 5 ou en 6 vitesses on considère, en plus de ces raisons, les ouvertures en cinquième, soit première-cinquième, et en sixième, soit première-sixième.

Le tableau 2 ci-dessous, où on a reporté les différents rapports de dimension du train réducteur 50 déjà portés au tableau 1, précise l'influence tout à fait considérable de ce facteur sur les échelonnements résultant pour un train Ravigneaux 70 défini par exemple par les nombres de dents suivants :

| | |
|---|---|
| Couronne 71 | 107 dents |
| Planétaire 73 | 61 dents |
| Planétaire 73a | 35 dents |
| Satellites 74 | 23 dents |
| Satellites 74a | 22 dents |

**Tableau 2 :**

| Rapport Planétaire 53 / Couronne 51 | | 0,42 | 0,47 | 0,52 | 0,57 | 0,62 |
|---|---|---|---|---|---|---|
| | 1 - R | 1,34 | 1,34 | 1,34 | 1,34 | 1,34 |
| | 1 - 2 | 1,75 | 1,75 | 1,75 | 1,75 | 1,75 |
| | 2 - 3 | 1,57 | 1,57 | 1,57 | 1,57 | 1,57 |
| Raisons | 3 - 4 | 1,27 | 1,30 | 1,33 | 1,36 | 1,40 |
| | 4 - 5 | 1,28 | 1,30 | 1,33 | 1,36 | 1,38 |
| | 5 - 6 | 1,30 | 1,29 | 1,27 | 1,26 | 1,25 |
| | 1 - 5 | 4,46 | 4,67 | 4,88 | 5,08 | 5,29 |
| Ouvertures | 1 - 6 | 5,80 | 6,01 | 6,22 | 6,42 | 6,63 |

On voit qu'on obtient une pluralité d'échelonnements allant des rapports resserrés à caractère sportif et ouverture réduite aux rapports écartés à caractère utilitaire et grande ouverture, en passant par les rapports et ouvertures les plus courants, et on comprendra que cette propriété se retrouve intégralement avec n'importe quel autre train Ravigneaux 70 offrant des raisons première-deuxième, deuxième-troisième et première-marche arrière différentes.

Bien entendu, l'invention n'est pas limitée aux formes de réalisation décrites et représentées uniquement à titre d'exemple, mais embrasse toutes variantes. En particulier, on ne sortira ni du cadre, ni de l'esprit de l'invention définie par ses revendications, en proposant tout autre agencement spécifique rendant la paroi de fermeture 20 solidaire en rotation, ou en rotation et translation, du manchon d'alimentation tournant 2 et du carter tournant 1 : par exemple, remplacer par un circlips la partie 22 en forme d'écrou de la paroi de fermeture 20, ou sertir ou souder celle-ci à demeure sur le manchon d'alimentation tournant 2.

## Revendications

1. Ensemble intégré comprenant un embrayage hydraulique et un train planétaire réducteur de vitesse, ledit ensemble comportant, d'une part, un palier d'alimentation fixe, (12), un carter tournant (1) solidaire d'un manchon d'alimentation (2) recevant au moins un piston (3,13), une paroi dite de fermeture et au moins un jeu de disques de friction (4,14) destinés à entraîner au moins un moyeu de sortie (6,16), et, d'autre part, un train planétaire réducteur de vitesse (50) comportant une couronne (51) destinée à être entraînée par un arbre d'entrée (10), un planétaire fixe (53), et un porte-satellites (52), **caractérisé par le fait que** la paroi de fermeture (20) est rendue solidaire en rotation du manchon d'alimentation (2) et du carter (1) et entravée directement par le porte-satellites (52), la paroi de fermeture (20) et le piston (3,13) définissant entre eux une chambre de compensation centrifuge (30).

2. Ensemble intégré selon la revendication 1, **caractérisé par le fait que** le porte-satellites (52) est assemblé directement sur la paroi de fermeture (20) et le planétaire (53) est maintenu fixe en rotation directement (59) par le palier d'alimentation fixe (12).

3. Ensemble intégré selon la revendication 2, **caractérisé par le fait que** les satellites (54) sont montés tournant autour d'axes (55) qui présentent des extensions (55A) engagées dans des perçages prévus dans la paroi de fermeture (20) et participant à la transmission du couple entre le porte-satellites (52), la paroi de fermeture (20), le manchon d'alimentation (2) et le carter tournant (1).

4. Ensemble intégré selon l'une des revendications 1 à 3, **caractérisé par le fait que** les axes (55) des satellites (54) sont traversés par des canaux de lubrification (56) du train planétaire (50) s'étendant parallèlement à l'axe et débouchant dans la chambre de compensation centrifuge (30).

5. Ensemble intégré selon la revendication 4, **caractérisé par le fait que** les canaux de lubrification (56) ménagés dans les axes (55) des satellites (54) assurent tant la lubrification du train planétaire (50) que l'alimentation de la chambre de compensation centrifuge (30).

6. Ensemble intégré selon l'une des revendications 4 ou 5, **caractérisé par le fait que** la chambre de compensation centrifuge (30) est alimentée à partir de canaux (40,40A) ménagés dans le palier d'alimentation fixe (12) et dans le manchon d'alimentation (2).

7. Ensemble intégré selon la revendication 6, **caractérisé par le fait que** les canaux d'alimentation (40,40A) pratiqués dans le palier d'alimentation fixe (12) et dans le manchon d'alimentation (2) assurent tant l'alimentation de la chambre de compensation centrifuge (30) que la lubrification du train planétaire (50).

8. Ensemble intégré selon l'une des revendications 2 à 7, **caractérisé par le fait que** la paroi de fermeture (20) est rendue également solidaire en translation du carter tournant (1).

9. Ensemble intégré selon la revendication 8, **caractérisé par le fait que** la paroi de fermeture (20) est en trois parties, à savoir une première partie (21) en forme de moyeu comportant des cannelures (21A) engagées dans des cannelures correspondantes du manchon d'alimentation (2), une deuxième partie (22) en forme d'écrou comportant un filetage (22A) engagé dans un filetage correspondant du manchon d'alimentation (2), et une troisième partie (23) en forme de piston munie d'un joint d'étanchéité et engagée dans le piston (3, 13).

10. Ensemble intégré selon la revendication 9, **caractérisé par le fait que** les première (21) et deuxième (22) parties de la paroi de fermeture (20) sont assemblées par des vis (24).

11. Ensemble intégré selon l'une des revendications 1 à 10, **caractérisé par le fait que** deux butées axiales (61,62) sont interposées l'une entre le planétaire (53) et le porte-satellites (52) et l'autre entre le porte-satellites (52) et la couronne (51), et assurent, simultanément, l'écartement entre le planétaire (53). le porte-satellites (52) et la couronne (51), et la position axiale de l'ensemble.

12. Ensemble intégré selon la revendication 11, **caractérisé en ce qu'**une rondelle intermédiaire (63) est interposée entre le palier d'alimentation fixe (12) et le planétaire (53) et permet de régler la position axiale de l'ensemble.

13. Transmission automatique, notamment de véhicules, comportant un ensemble intégré selon l'une des revendications 1 à 12.

14. Transmission automatique selon la revendication 13, **caractérisée par le fait qu'**elle comporte en outre un train planétaire (70) à quatre éléments (71, 72, 73, 73a), dont un porte-satellites (72) entraînant une roue de sortie (90) et un planétaire (73) entraîné par un moyeu de friction (16), un embrayage simple (103) solidaire de la couronne (71) du train planétaire (70), un frein (104) destiné à immobiliser un moyen de friction (6) entraînant l'un (73A) des planétaires du train planétaire (70), et un frein (105) destiné à immobiliser ladite couronne (71) et ledit embrayage simple (103).

## Patentansprüche

1. Integrierte Baugruppe aus einer hydraulischen Kupplung und einem untersetzenden Planetensatz, bestehend aus einerseits einem festliegenden Speisungslager (12), einem sich kraftschlüssig verbunden mit einer Speisungsmuffe (2) mit mindestens einem Kolben (3, 13) und mindestens einem Satz von Kupplungsscheiben (4, 14) drehenden Gehäuse (1), dazu bestimmt mindestens eine Abtriebsnabe (6, 16) anzutreiben, **dadurch gekennzeichnet, dass** der untersetzende Planetensatz (50) besteht aus einem von einer Antriebswelle (10) angetriebenen Ringrad (51), einem festliegenden Sonnenrad (53) und einem Planetenträger (52), sowie dadurch dass die Gruppe eine Abschlussplatte (20) enthält, welche in Drehung kraftschlüssig mit der Speisungsmuffe (2) und dem Gehäuse (1 ) verbunden ist und unmittelbar von dem Planetenträger (52) angetrieben wird wobei die Abschlussplatte (20) und der Kolben (3,13) zwischen sich eine Fliehkraftausgleichskammer bilden.

2. Integrierte Baugruppe nach Anspruch 1, **dadurch gekennzeichnet dass** der Planetenträger (52) unmittelbar mit der Abschlussplatte (20) verbunden ist und das Sonnenrad (53) bei Drehung unmittelbar (59) von dem festliegenden Spreisungslager (12) festgehalten wird.

3. Integrierte Baugruppe nach Anspruch 2, **dadurch gekennzeichnet dass** die Planeten (54) sich auf Wellen (55) drehend eingebaut sind, welche Verlängerungen (55A) aufweisen, die in Bohrungen in der Abschlussplatte (20) eingelassen sind und zu der Kraftübertragung von dem Planetenträger (52) auf die Abschlussplatte (20); die Speisungsmuffe (2) und das sich drehende Gehäuse (1 ) beitragen.

4. lntegrierte Baugruppe nach Anspruch 1 bis 3, **dadurch gekennzeichnet dass** in den Wellen (55) der Planeten (54) Kanäle (56) zur Schmierung des Planetensatzes (50) vorgesehen sind, die parallel zu dessen Achse verlaufen und in die Fliehkraftausgleichskammer (30) einmünden.

5. Integrierte Baugruppe nach Anspruch 4, **dadurch gekennzeichnet dass** die in den Wellen (55) der Planeten (54) vorgesehenen Schmierungskanäle (56) sowohl die Schmierung des Planetensatzes (50) gewährleisten als auch die Versorgung der Fliehkraftausgleichskammer (30).

6. Integrierte Baugruppe nach einem der Ansprüche 4 und 5, **dadurch gekennzeichnet dass** die Versorgung der Fliehkraftausgleichskammer (30) durch in dem festliegenden Speisungslager (12) und in der Speisungsmuffe (2) angebrachte Kanäle (40, 40A) erfolgt.

7. lntegrierte Baugruppe nach Anspruch 6, **dadurch gekennzeichnet dass** die in dem Speisungslager (12) und in der Speisungsmuffe (2) vorgesehenen Schmierungskanäle (40, 40A) sowohl die Versorgung der Fliehkraftausgleichs-kammer (30) als auch die Schmierung des Planetensatzes (50) gewährleisten.

8. Integrierte Baugruppe nach einem der Ansprüche 2 bis 7, **dadurch gekennzeichnet dass** die Abschlussplatte (20) auch in Verschiebung mit dem sich drehenden Gehäuse (1) verbunden ist.

9. Integrierte Baugruppe nach Anspruch 8, **dadurch gekennzeichnet dass** die Abschlussplatte (20) aus drei Teilen besteht, nämlich einem ersten Teil (21) in Form einer mit in die entsprechenden Riefen der Speisungsmuffes (2) eingreifende Riefen (21A) versehenen Nabe, einem zweiten Teil (22) in Form einer, mit einer in das entsprechende Gewinde der Speisungsmuffes (2) eingreifendem Gewinde versehenen Mutter (22A) und einem dritten Teil (23) in Form eines in den Kolben (3, 13) eingepassten und mit einer Dichtung versehenen Kolbens.

10. Integrierte Baugruppe nach Anspruch 9, **dadurch gekennzeichnet dass** der erste (21) und der zweite Teil (22) der Abschlussplatte mittels der Schrauben (24) zusammengebaut sind.

11. integrierte Baugruppe nach einem der Ansprüche 1 bis 10, **dadurch gekennzeichnet dass** zwei axiale Lager (61, 62) nämlich einmal zwischen dem Sonnenrad (53) und dem Planetenträger (52) und zum Anderen zwischen dem Planetenträger (52) und dem Ringrad (51) angebracht sind und gleichzeitig die Abstände zwischen dem Sonnenrad (53), dem Planetenträger (52) und dem Ringrad (51), sowie die axiale Einstellung der gesamten Gruppe sicherstellen.

12. Integrierte Baugruppe nach Anspruch 11, **dadurch gekennzeichnet dass** eine Trennscheibe (63) zwischen dem festliegenden Speisungslager (12) und dem Sonnenrad (53) eingesetzt ist und die axiale Stellung der gesamten Gruppe bestimmt.

13. Mit einer integrierten Baugruppe nach einem der Ansprüche 1 - 12 versehenes automatisches Getriebe, insbesondere für Fahrzeuge.

14. Automatisches Getriebe nach Anspruch 13, **dadurch gekennzeichnet dass** es zusätzlich einen Planetensatz (70) aus vier Teilen (71, 72, 73, 73A) enthält, und zwar einen Planetenträger (72) der ein Abtriebsrad (90) antreibt und ein von einer Reibungsnabe (16) angetriebenes Sonnenrad (73), eine einfache, mit dem Ringrad (71) des Planetensatzes (70) kraftschlüssige Kupplung (103), eine zur Festlegung einer Reibungsnabe (6), welche-eines der Sonnenräder (73A) des Planetensatzes (70) antreibt, bestimmte Bremse (104) und eine zur Festlegung des Ringrads (71) und der einfachen Kupplung (73) bestimmte Bremse (105).

## Claims

1. Integrated assembly comprising a hydraulic clutch and a speed reducing planetary gear set, said assembly including, on one hand, a stationary supply bush (12), a rotating casing (1) integral with a supply sleeve (2) receiving at least one piston (3, 13), a partition called end partition, and at least one set of friction discs (4, 14) so as to drive at least one friction hub (6, 16) and, on the other hand, a speed reducing planetary gear set (50) including a ring gear (51 ) to be driven by an input shaft (10), a stationary sun gear (53) and a planet pinion carrier (52), **characterised by** the fact that the end partition (20) is fixed for rotation with the supply sleeve (2) and with the casing (1), and driven directly by the planet pinion carrier (52), the end partition (20) and the piston (3, 13) defining a centrifugal pressure compensation chamber (30) between themselves.

2. Integrated assembly according to claim 1, **characterised by** the fact that the planet pinion carrier (52) is assembled directly on the end partition (20) and the sun gear (53) is held stationary in rotation directly (59) by the stationary supply bush (12).

3. Integrated assembly according to claim 2 **characterised by** the fact that the planet pinions (54) are rotatably mounted on shafts (55) which have extensions (55A) fitted in bores machined in the end partition (20) and contribute in transmitting torque between the planet pinion carrier (52), the end partition (20), the supply sleeve (2) and the rotating casing (1).

4. Integrated assembly according to one of claims 1 to 3, **characterised by** the fact that the shafts (55) of the planet pinions (54) are crossed by longitudinal channels (56) for the lubrication of the planetary gear set (50) which are parallel to the shafts and open in the centrifugal compensation chamber (30).

5. Integrated assembly according to claim 4, **characterised by** the fact that the lubrication channels (56) provided for in the shafts (55) of the planet pinions (54) ensure the lubrication of the planetary gear set (50) as well as the supply to the compensation chamber (30).

6. lntegrated assembly according to claim 4 or 5, **characterised by** the fact that the centrifugal compensation chamber (30) is supplied through channels (40, 40A) provided for in the stationary supply bush (12) and in the supply sleeve (2).

7. Integrated assembly according to claim 6, **characterised by** the fact that the supply channels (40, 40A) provided for in the stationary supply bush (12) and in the supply sleeve (2) ensure the supply to the compensation chamber (30) as well as to the planetary gear set (50).

8. Integrated assembly according to any one of claims 2 to 7, **characterised by** the fact that the end partition (20) is also fixed for translation with the rotating casing (1 ).

9. Integrated assembly according to claim 8, **characterised by** the fact that the end partition (20) comprises three parts, i.e. a first part (21) in the shape of a hub having splines (21A) engaged in corresponding splines of the supply sleeve (2), a second part in the shape of a nut having a threaded portion (22A) engaged in a corresponding threaded portion of the supply sleeve (2), and a third part (23) in the shape of a piston having a tight seal and engaged in the piston (3, 13).

10. Integrated assembly according to claim 9, **characterised by** the fact that the first (21) and second (22) parts of the end partition (20) are assembled by screws (24).

11. Integrated assembly according to any one of claims 1 to 10, **characterised by** the fact that two axial bearings (61, 62) are mounted, one between the sun gear (53) and the planet pinion carrier (52), the other between the planet pinion carrier (52) and the ring gear (51 ) so as to ensure simultaneously the spacing between the sun gear (53), the planet pinion carrier (52) and the ring gear (51 ) and the axial position of the assembly.

12. lntegrated assembly according to claim 11, **characterised by** the fact that an intermediate washer is located between the stationary supply bush (12) and the sun gear (53) and is used to adjust the axial position of the assembly.

13. Automatic transmission, particularly for vehicles, including an integrated assembly according to any one of claims 1 to 12.

14. Automatic transmission according to claim 13, **characterised by** the fact that it furthermore includes a planetary gear set (70) comprising four members (71, 72 73, 73A), among which is a planet pinion carrier (72) driving an output gearwheel (90) and a sun gear (73) driven by a friction hub (16), a single clutch (103) integral with ring gear (71 ) of planetary gear set (70), a brake (104) adapted to bring to a stop a friction hub (6) driving one (73A) of the sun gears of planetary gear set (70), and a brake (105) adapted to bring to a stop said ring gear (71 ) and said single clutch (103).
